# EUROPEAN PATENT APPLICATION

(11) **EP 1 978 319 A2**
(43) Date of publication of application: **08.10.2008**
(21) Application number: 08005916.5
(22) Date of filing: 27.03.2008
(51) Int. Cl.: F25D 23/00

(54) **Apparatus including freezing unit and projector including freezing unit**

(30) Priority: 29.03.2007 JP 2007088318
(71) Applicant: Sanyo Electric Co., Ltd., Moriguchi-shi, Osaka-fu (JP)
(72) Inventor: Tsuchiya, Masaki, Ota-shi Gunma, 373-0816 (JP); Ishihara, Toshikazu, Kumagaya-shi Saitama, 360-0032 (JP); Nakamura, Takahiro, Ota-shi Gunma, 373-0813 (JP)
(74) Representative: Glawe, Ulrich

(57) **Abstract**

There is disclosed an apparatus including a freezing unit in which the freezing unit (10) can be operated without any trouble even when a main body rotates. A liquid crystal display projector (P) (an apparatus) including a freezing unit (10) having a refrigerant circuit constituted of a compressor (12), a radiator (14), a capillary tube (16) (a pressure reducing unit), an evaporator (18) and the like includes a rotator (40) as a posture adjustment unit for adjusting the main body (1) to a basic posture to maintain at least a lubricating performance of the compressor (12) in accordance with a posture change of the main body (1). The rotator (40) rotates to adjust the basic posture of the whole freezing unit (10), and a rotary shaft of this rotator (40) is arranged in parallel with an optical axis of a light source on the same plane.

## Description

### BACKGROUND OF THE INVENTION

The present invention relates to an apparatus in which a main body includes a freezing unit having a refrigerant circuit constituted of a compressor, a radiator, a pressure reducing unit, an evaporator and the like, and it also relates to a projector including the freezing unit.

Heretofore, a freezing unit having a refrigerant circuit constituted of a compressor, a radiator, a pressure reducing unit, an evaporator and the like is mounted on various apparatus such as a refrigerator, a freezer and an air conditioner. Such an apparatus is usually stationary, so that an oil reservoir is formed in a lower part of a container in the compressor of the freezing unit to receive oil owing to gravity, and the oil is pumped up from the oil reservoir and supplied to a frictional portion (a sliding portion) (e.g., Japanese Patent Application Laid-Open No. 2003-129977).

Moreover, in a case where the freezing unit is used as a car air conditioner for conditioning air in a car, the freezing unit is mounted on the car, so that the installation position of the freezing unit tilts owing to a posture of the car. Therefore, it has been devised that a special oil supply mechanism is attached inside and outside the compressor to pump up the oil (e.g., Japanese Patent Application Laid-Open No. 2005-256709).

In addition, the applicant has previously developed a projector including this freezing unit mounted thereon so that an optical element of the projector is cooled in the cold air through the evaporator. The optical element of the projector is cooled in the freezing unit in this manner, whereby a temperature of the optical element can be held at a suitable temperature. Moreover, various effects such as reducing of amount of air flows, improvement of an energy efficiency and reducing of an installation space can be obtained.

On the other hand, such a projector is provided rotatably around a burner axis (an optical axis) of a light source lamp, and hence the freezing unit needs to correspond to this constitution. That is, in a case where the freezing unit is fixedly installed in the main body, the freezing unit rotates owing to the rotation of the projector. Therefore, in particular, it becomes difficult to pump up the oil from the oil reservoir of the compressor, and a problem occurs that the oil cannot smoothly be supplied to a frictional portion (the sliding portion).

In particular, when the freezing unit is mounted on the car as described above, a tilt angle can be estimated to a certain degree, so that it is possible to solve a problem of the oil owing to the above-mentioned oil supply mechanism. However, the freezing unit needs to be attached to the projector in consideration of even a case where the unit is vertically (head and tail) reversed around the burner axis as the rotation center. That is, when the freezing unit is mounted on the projector, it is a requirement that the freezing unit can be operated without any trouble even at any rotation angle, but the conventional constitution cannot meet this requirement.

### SUMMARY OF THE INVENTION

The present invention has been developed in order to solve a conventional technical problem, and an object thereof is to provide an apparatus including a freezing unit in which the freezing unit can be operated without any trouble even in a case where a main body rotates.

An apparatus including a freezing unit according to a first aspect of the invention is characterized by having a main body provided with the freezing unit having a refrigerant circuit constituted of at least a compressor, a radiator, a pressure reducing unit and an evaporator; and the apparatus is provided with posture adjustment means for adjusting the main body to a basic posture to maintain at least a lubricating performance of the compressor in accordance with a posture change of the main body.

An apparatus including a freezing unit according to a second aspect of the invention is characterized in that in the first aspect of the invention, the posture adjustment means adjusts a basic posture to maintain a flow of a refrigerant in the refrigerant circuit.

An apparatus including a freezing unit according to a third aspect of the invention is characterized in that in the second aspect of the invention, the posture adjustment means rotates to adjust the basic posture of the whole freezing unit, and the compressor, the radiator and the evaporator are arranged around a rotary shaft of this posture adjustment means.

An apparatus including a freezing unit according to a fourth aspect of the invention is characterized in that in the third aspect of the invention, an inlet pipe and an outlet pipe of the evaporator are arranged along the rotary shaft of the posture adjustment means and arranged away from each other.

An apparatus including a freezing unit according to a fifth aspect of the invention is characterized in that in the first aspect of the invention, the posture adjustment means adjusts the basic posture of the compressor only, and a refrigerant discharge pipe and a refrigerant suction pipe of the compressor are made of pipes having flexibility.

A projector including a freezing unit according to a sixth aspect of the invention which is the apparatus according to any one of the first to fifth aspects of the invention is characterized by comprising a main body including a light source, an optical element which processes light emitted from this light source in accordance with image information, and a projection lens which projects a projected image of the processed light onto a screen, wherein the posture adjustment means rotates to adjust a basic posture of the whole freezing unit or a compressor only, and a rotary shaft of the posture adjustment means is arranged in parallel with an optical axis of the light source on the same plane.

According to the first aspect of the invention, the apparatus including the main body provided with the freezing unit having the refrigerant circuit constituted of at least the compressor, the radiator, the pressure reducing unit and the evaporator is provided with the posture adjustment means for adjusting a basic posture to maintain at least the lubricating performance of the compressor in accordance with the posture change of the main body. Therefore, even when the posture of the main body changes, the freezing unit can be operated without any trouble.

In particular, the posture adjustment means can maintain at least the basic posture of the compressor, so that even when the main body changes to any posture, the lubricating performance of the compressor can be maintained. A disadvantage that the compressor is running short of oil supply can be eliminated.

In consequence, oil can smoothly be supplied to a frictional portion (a sliding portion) without constituting any special oil supply mechanism in the compressor, so that enlargement of the compressor and steep rise of manufacturing cost can be minimized.

Moreover, as in the second aspect of the invention, the posture adjustment means can adjust a basic posture to maintain the flow of the refrigerant in the refrigerant circuit. In consequence, the basic posture to maintain the flow of the refrigerant in the refrigerant circuit is adjusted by the posture adjustment means, whereby even when the main body changes to any posture, the flow of the refrigerant in the refrigerant circuit can be maintained.

Furthermore, in the second aspect of the invention, the posture adjustment means rotates to adjust the basic posture of the whole freezing unit, and the compressor, the radiator and the evaporator are arranged around the rotary shaft of this posture adjustment means as in the third aspect of the invention, whereby the freezing unit can smoothly be rotated by the posture adjustment means.

In addition, in the third aspect of the invention, the inlet pipe and the outlet pipe of the evaporator are arranged along the rotary shaft of the posture adjustment means and arranged away from each other as in the fourth aspect of the invention. In consequence, while the posture adjustment means smoothly rotates the evaporator, the refrigerant flowing through pipes between an inlet pipe and an outlet pipe performs heat exchange between the refrigerant and the evaporator, whereby a disadvantage that a heat absorbing function of the evaporator lowers can be eliminated.

According to the fifth aspect of the invention, in the first aspect of the invention, the posture adjustment means can adjust the basic posture of the compressor only, and the refrigerant discharge pipe and the refrigerant suction pipe of the compressor are constituted of the pipes having flexibility. Therefore, even when the main body (head and tail) is vertically reversed, a connected state to the refrigerant discharge pipe and the refrigerant suction pipe is secured, and smooth flow of the refrigerant in the refrigerant circuit can be maintained. In consequence, even when the main body is rotated to any posture, while the basic posture of the compressor is maintained to realize smooth oil supply, the freezing unit can be operated without any trouble.

In consequence, as in the sixth aspect of the invention, the apparatus including the freezing unit according to any one of the first to fifth aspects of the invention is the projector, the above inventions are applied to the projector, the posture adjustment means rotates to adjust the basic posture of the whole freezing unit or the compressor only, and the rotary shaft of the posture adjustment means is arranged in parallel with the optical axis of the light source on the same plane. In this case, even when the freezing.unit is mounted on the projector, the freezing unit can be operated without any trouble.

### BRIEF DESCRIPTION OF THE DRAWINGS

FIG. 1 is a perspective view showing a schematic constitution of a liquid crystal display projector as one embodiment of an apparatus including a freezing unit to which the present invention is applied (Embodiment 1);
FIG. 2 is an arrangement diagram viewed from a front surface of the freezing unit of the liquid crystal display projector shown in FIG. 1;
FIG. 3 is an arrangement diagram viewed from one side surface of the freezing unit of the liquid crystal display projector shown in FIG. 1;
FIG. 4 is an arrangement diagram viewed from a plane of the freezing unit of the liquid crystal display projector shown in FIG. 1;
FIG. 5 is a diagram showing a duct of the liquid crystal display projector shown in FIG. 1, and a flow of air flowing through the duct;
FIG. 6 is a diagram showing the freezing unit in a case where a main body of the liquid crystal display projector shown in FIG. 1 rotates.
FIG. 7 is a schematic diagram showing a part of a freezing unit according to another embodiment of a liquid crystal display projector to which the present invention is applied; and
FIG. 8 is a schematic diagram showing a part of a freezing unit in a case where a main body of the liquid crystal display projector shown in FIG. 7 rotates as much as 180 degrees.

### DETAILED DESCRIPTION OF THE PREFERRED EMBODIMENTS

Embodiments of the present invention will hereinafter be described in detail with reference to the drawings.

### (Embodiment 1)

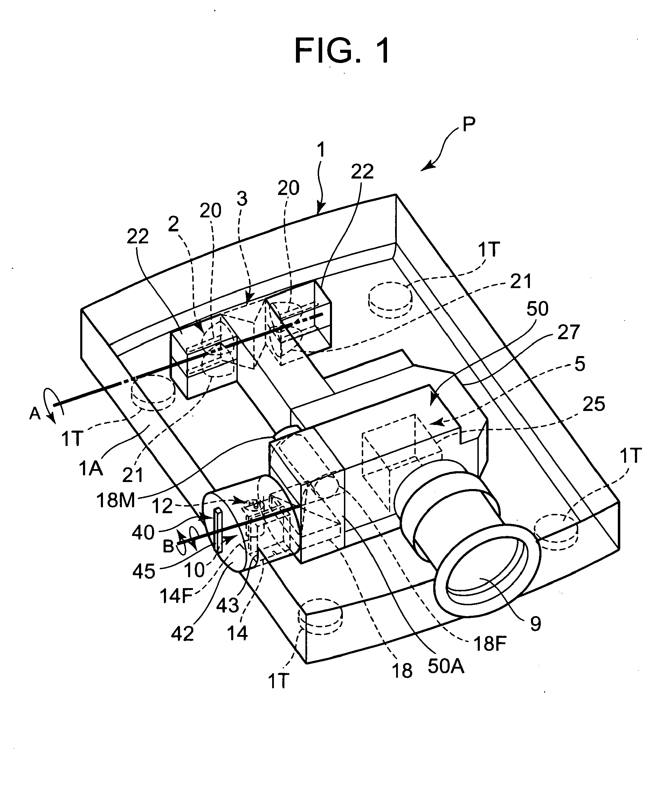

FIG. 1 is a schematic perspective view showing a projector as one embodiment of an apparatus including a freezing unit according to the present invention. The projector according to the present embodiment is a liquid crystal display projector P constituted by providing, in a main body 1, a light source 2, an optical path changing member 3, a uniform illumination optical system (not shown), a color separation optical system (not shown), an optical element 5, a projection lens 9 and a freezing unit 10 of the optical element 5. The main body 1 is a flat housing constituted of a material having an excellent heat release property, for example, magnesium. It is to be noted that for the sake of description of each unit provided in the main body 1, the main body 1 is shown in a flat section in which an upper part of the main body is cut.

The light source 2 includes a lamp 20 such as an extra-high pressure mercury lamp, and a reflector 21 for emitting forwards light (divergent light) diverging from the lamp. In the light source 2 of the embodiment, a plurality of (four) lamps 20 are provided with the reflectors 21, respectively, and are received in lamp boxes 22 provided in the main body 1.

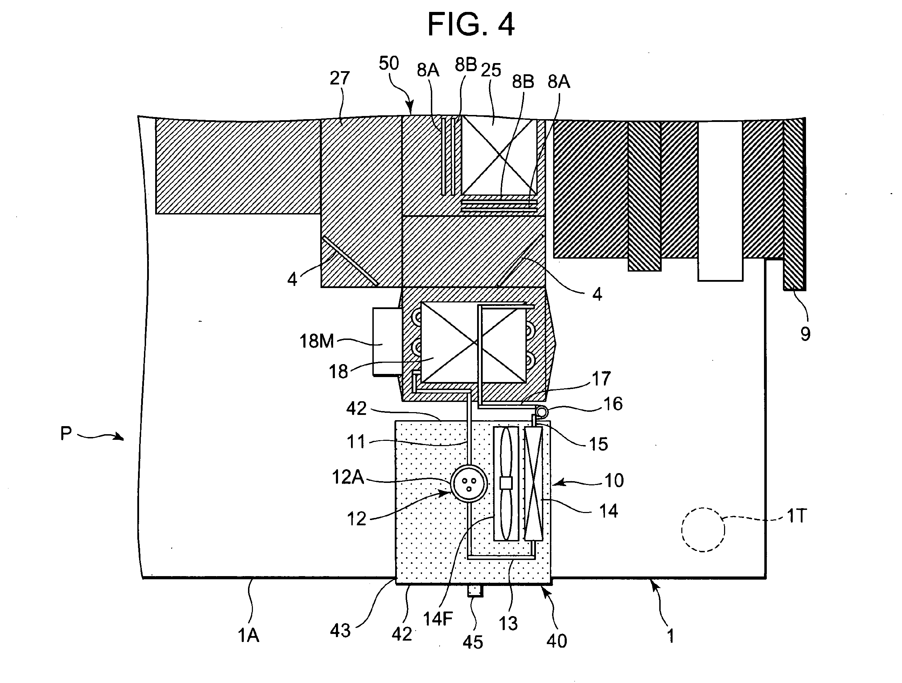

The uniform illumination optical system converts the light emitted from the light source 2 into a parallel luminous flux having a uniform luminance distribution, and includes an integrator lens, a condenser lens and the like. Moreover, the color separation optical system separates the parallel luminous flux from the uniform illumination optical system into light of colors R, G and B, and includes a dichroic mirror (not shown) and a mirror 4 for reflection (not shown in FIG. 1, and shown in FIG. 4 as described later) which separates the parallel luminous flux from the uniform illumination optical system into the respective colors and the like.

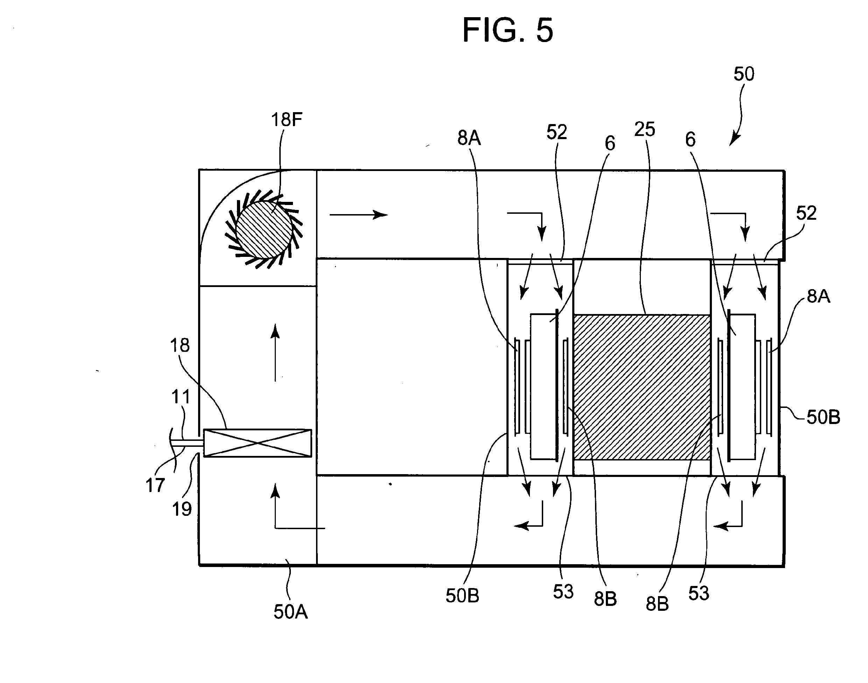

As shown in FIG. 4 or 5, the optical element 5 includes three liquid crystal display panels (LCD panels) 6, incident-side sheet polarizers 8A each disposed with a space from each liquid crystal panel 6 on an incidence side of the panel, outgoing-side sheet polarizers 8B (shown in FIGS. 4 and 5 as described later) each disposed with a space from each liquid crystal panel 6 on an emission side, a cross dichroic cross dichroic prism 25 and the like. The liquid crystal display panels 6 process (modulate) light separated by the color separation optical system and guided to the liquid crystal display panels 6 in accordance with image information. The cross dichroic prism 25 synthesizes each color light to form a projected light image. This cross dichroic cross dichroic prism 25 includes a reflective surface including X-like dielectric multilayer films, and the light from each liquid crystal panel 6 is formed into a single luminous flux via the reflective surface. It is to be noted that the projection lens 9 enlarges and projects the projected light image from the cross dichroic cross dichroic prism 25 onto the screen, and is detachably attached to a hole (not shown) formed in a wall surface of the main body 1. Further in FIG. 1, reference numeral 27 is a box member which covers an optical path for guiding the light emitted from the light source 2 to the liquid crystal display panels 6, the incident-side sheet polarizers 8A, 8B and the like, 1T is a leg portion provided on a bottom part of the main body 1, and 18M is a motor of a fan 18F described later. That is, a path (an optical path) through which the light passes from the light source 2 to the incident-side sheet polarizers 8A on the incidence side of the liquid crystal display panels 6 is formed in the box member 27.

An operation of the above constitution will be described. The light emitted from the light source 2 is converted into the parallel luminous fluxes having a uniform luminance distribution via the uniform illumination optical system, separated into the light of the colors R, G and B in the color separation optical system, and guided into the liquid crystal display panels 6 which function as corresponding light bulbs via the incidence-side incident-side sheet polarizers 8A. The luminous fluxes guided into the liquid crystal display panels 6 are modulated in accordance with the image information in the panels, converted into a projected image of the single luminous flux by the cross dichroic prism 25 through the emission-side outgoing-side sheet polarizers 8B, and enlarged and projected on the screen by the projection lens 9.

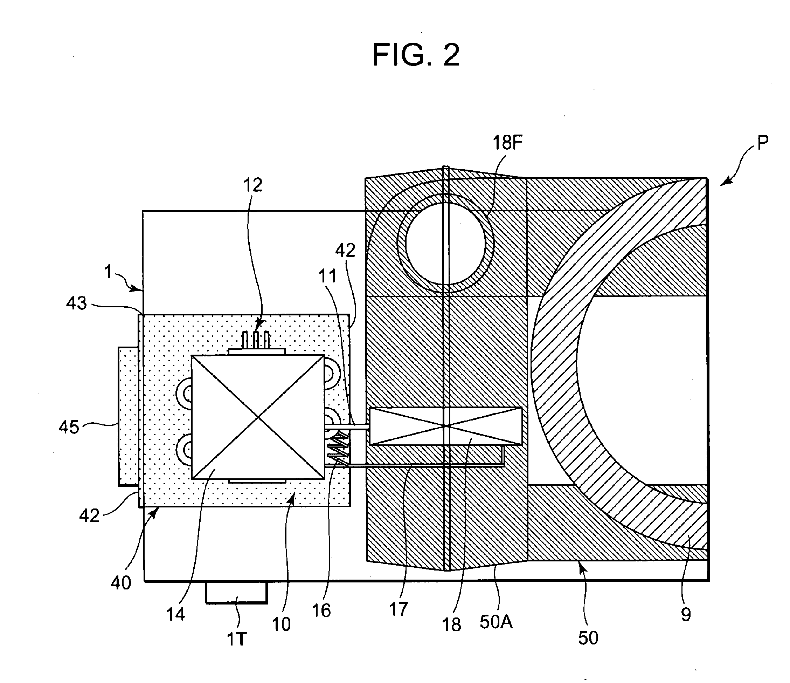

Next, a freezing unit 10 of the present invention will be described with reference to FIGS. 2 to 4. FIGS. 2 to 4 are diagrams showing arrangements of the freezing unit 10 of the present invention as viewed from a front surface (a projection lens 9 side), a side surface and a plane. The liquid crystal display projector P of the present invention includes the freezing unit 10 in the main body 1. This freezing unit 10 cools the optical element 5 including the liquid crystal display panels 6, the incident-side sheet polarizers 8A, 8B, the cross dichroic prism 25 and the like, and a refrigerant circuit is constituted of a compressor 12, a radiator 14, a capillary tube 16 (a pressure reducing unit of the present invention) and an evaporator 18 as shown in FIGS. 2 to 4. That is, a refrigerant discharge tube 13 of the compressor 12 is connected to an inlet of the radiator 14, and an outlet of the radiator 14 is connected to a refrigerant pipe 15 extending to the capillary tube 16. An outlet of the capillary tube 16 is connected to an inlet of the evaporator 18 via a refrigerant pipe 17 (an inlet pipe of the evaporator 18), and an outlet of the evaporator 18 is connected to a refrigerant suction tube 11 (an outlet pipe of the evaporator 18) of the compressor 12 to constitute an annular refrigerant circuit.

The compressor 12 of the present embodiment is constituted by disposing, in a sealed container 12A having a vertically long cylindrical shape, a compression element and an electromotive element (a driving element) for driving this compression element. The radiator 14 for use in the embodiment is a heat exchanger of an air cooling type, and hence a fan 14F as blowing means is installed in the vicinity of (on the side of) the radiator 14. It is to be noted that in the present embodiment, the capillary tube 16 is used as a unit to reduce a pressure of the refrigerant, but the pressure reducing unit is not limited to the capillary tube, and any type of unit, for example, an expansion valve may be used as long as the pressure of the refrigerant can be reduced to a predetermined pressure.

The freezing unit 10 of the present embodiment is constituted so that a basic posture thereof can be maintained in accordance with a posture change of the main body 1 of the liquid crystal display projector P by posture adjustment means. In the present embodiment, the basic posture is such a posture of the satisfactorily reliable freezing unit 10 that oil can smoothly be supplied to at least a frictional portion (a sliding portion) of the compressor 12 (a lubricating performance can be maintained) and that a flow of the refrigerant in the refrigerant circuit can be maintained. The posture adjustment means of the present embodiment is constituted of a basket-like rotator 40, and the freezing unit 10 is installed rotatably around a rotary shaft B arranged in parallel with a burner axis A (an optical axis) of the light source 2 on the same plane. Specifically, in this rotator 40, the compressor 12, the radiator 14 and the fan 14F of the radiator 14 are received, and the evaporator 18 is disposed in a duct 50 described later. The capillary tube 16 is disposed in a space between the rotator 40 and the duct 50.

An outer side surface of the rotator 40 is a disc-like panel 42, and this panel is rotatably disposed in a circular hole 43 formed in a side wall 1A of the main body 1 of the liquid crystal display projector P. That is, the rotator 40 of the present embodiment is rotatably supported on the side wall 1A of the main body 1 by the hole 43 of the main body 1. The panel surface 42 exposed to the outer surface of the main body 1 is provided with a dial 45 for adjusting a position of the rotator 40. That is, the rotator 40 of the present embodiment is constituted so that the dial 45 can be operated to adjust the posture of the rotator 40.

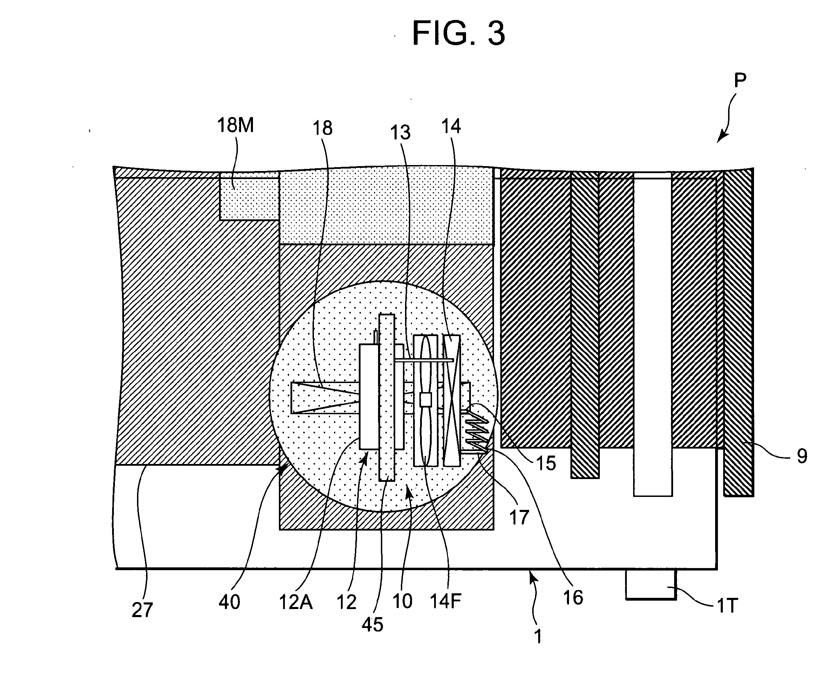

Then, in the rotator 40, the compressor 12, the radiator 14 and the fan 14F are arranged around the rotary shaft B of the rotator 40. Specifically, the compressor 12, the fan 14F and the radiator 14 are arranged in order of the compressor 12, the fan 14F and the radiator 14 in a diametric direction of the rotator 40 crossing an axial center direction of the rotary shaft B at right angles, and they are arranged in parallel on the same plane. That is, as shown in FIG. 3, the compressor 12 is disposed along one side surface of the fan 14F, and the radiator 14 is disposed along the other side surface of the fan 14F. In particular, according to the present embodiment, in a position corresponding to the rotation center of the rotator 40, the compressor 12 is disposed in the rotator 40 with the basic posture in a position where a vertically long cylindrical axis (a vertical axis) of the compressor 12 crosses the rotary shaft B of the rotator 40 at right angles. In addition, the basic posture is not necessarily limited to the position where the axis crosses the rotary shaft at right angles as long as the lubricating performance of the compressor 12 is maintained.

Moreover, the capillary tube 16 and the evaporator 18 are similarly arranged around the rotary shaft B of the rotator 40. In the present embodiment, the capillary tube 16 and the evaporator 18 are positioned linearly with the units (the compressor 12, the fan 14F and the radiator 14) arranged in the diametric direction crossing the axial center direction at right angles in the rotator 40.

The compressor 12, the radiator 14 and the evaporator 18 are arranged around the rotary shaft B in this manner, whereby the freezing unit 10 can smoothly be rotated by the rotator 40. Especially, the units constituting the freezing unit 10 (the compressor 12, the radiator 14, the fan 14F, the capillary tube 16 and the evaporator 18) are linearly arranged, and a diameter of the freezing unit 10 rotated by the rotator 40 is set to be smaller than that of the rotator 40, whereby the freezing unit 10 can be received in a diametric region of the rotator 40. Therefore, a rotation radius of the freezing unit 10 can be reduced, whereby smoother rotation can be achieved owing to the rotator 40, and excessive enlargement of the rotator 40 can be prevented.

On the other hand, the duct 50 is disposed around the optical element 5 including the liquid crystal display panels 6, the incident-side sheet polarizers 8A, 8B, the cross dichroic prism 25 and the like, and cold air subjected to the heat exchange between the air and the evaporator 18 is supplied to the liquid crystal display panels 6, the incident-side sheet polarizers 8A, 8B and the cross dichroic prism 25 via the duct 50. That is, in the liquid crystal display projector P of the present embodiment, the optical element 5 is disposed in a cooling air path constituted of the duct 50, and the optical element is locally cooled by the cold air circulated through the duct 50.

This duct 50 is constituted of an insulating material. Examples of the usable insulating material include rubber/plastic materials such as hard vinyl chloride, a silicon resin, a fluorine resin, a phenol resin, a polycarbonate resin and a polystyrene resin having a thermal conductivity of about 0.1 W/(m•K) to 0.3 W/(m•K), glass materials such as quartz glass and glass ceramic having a thermal conductivity of about 1 W/(m•K) to 4 W/(m•K), fiber insulating materials such as glass wool, rock wool and carbide cork having a thermal conductivity of about 0.0045 W/(m•K) or less, foam styrol, and insulating materials for construction and vacuum insulating materials constituted of these materials. In addition, as the insulating material, a material having a thermal conductivity of 1 W/(m•K) or less may be used.

Moreover, in the present embodiment, as described above, the evaporator 18 of the freezing unit 10 is disposed in the duct 50, and the cold air subjected to the heat exchange between the air and the evaporator 18 can be circulated. As shown in FIG. 5, the duct 50 is formed around the liquid crystal display panels 6 and the cross dichroic prism 25, and is constituted of a cylindrical sealed path 50A having a substantially U-shape, and communication tubes 50B which connect blowout ports 52 formed in one end of the sealed path 50A positioned above the liquid crystal display panels 6 and suction ports 53 formed in the other end of the sealed path 50A positioned under the liquid crystal display panels 6. In the sealed path 50A, the evaporator 18 and the fan 18F are arranged.

Furthermore, in the communication tubes 50B, the liquid crystal display panels 6 (one of the three liquid crystal display panels 6 is installed in one communication tube 50B) and the incident-side sheet polarizers 8A, 8B are installed. Each liquid crystal panel 6 and the incident-side sheet polarizers 8A, 8B are arranged with a space therebetween in the communication tube 50B. The polarization plate 8A is disposed with a space from one wall surface of the communication tube 50B, and the polarization plate 8B is similarly disposed with a space from the other wall surface of the communication tube 50B. Furthermore, the communication tubes 50B are constituted so that the liquid crystal display panels 6, the incident-side sheet polarizers 8A, 8B, light to be radiated, and the image information modulated by the liquid crystal display panels 6 and then sent to the cross dichroic prism 25 are not disturbed and that the cold air subjected to the heat exchange between the air and the evaporator 18 are supplied to the liquid crystal display panels 6, the incident-side sheet polarizers 8A, 8B and the cross dichroic prism 25.

The evaporator 18 disposed in this duct 50 is connected to the refrigerant pipe (the inlet pipe) 17 from the capillary tube 16 on an inlet side, and connected to the refrigerant suction tube (the outlet pipe) 11 of the compressor 12 on an outlet side. In the present embodiment, the evaporator 18 is disposed rotatably by the rotator 40 in the duct 50. That is, a hole 19 extending through the duct 50 is formed in a side wall of the sealed path 50A of the duct 50 corresponding to the rotary shaft B of the rotator 40, and in the hole 19, the refrigerant pipe 17 and the refrigerant suction tube 11 are arranged apart from each other along the rotary shaft B of the rotator 40 in an insulating manner. Both the pipes 11, 17 are wound with an insulating material, whereby an amount of heat exchange between the pipes and atmospheric air is reduced, and the more effective freezing unit 10 can be achieved.

Thus, the refrigerant pipe 17 connected to the inlet side of the evaporator 18 and the refrigerant suction tube 11 connected to the outlet side of the evaporator 18 are arranged along the rotary shaft B of the rotator 40, whereby the evaporator 18 can be disposed rotatably by the rotator 40 in the duct 50. Furthermore, the refrigerant pipe 17 and the refrigerant suction tube 11 are arranged apart from each other in the insulating manner, whereby it is possible to prevent a disadvantage that the refrigerant flowing through the refrigerant pipe 17 extending from the capillary tube 16 to the evaporator 18 and the refrigerant flowing through the refrigerant suction tube 11 extending from the evaporator 18 to the compressor 12 perform heat exchange therebetween. That is, the refrigerant having the pressure thereof reduced by the capillary tube 16 absorbs heat from the refrigerant flowing through the refrigerant suction tube 11 to evaporate, whereby it is possible to eliminate a disadvantage that a heat absorbing function in the evaporator 18 lowers and that the air circulated through the evaporator 18 is not easily cooled.

A cooling operation of the liquid crystal display panels 6 having the above constitution according to the present embodiment will be described. When the compressor 12 in the rotator 40 is driven, a low-temperature low-pressure refrigerant is sucked from the refrigerant suction tube 11 into a compression element (not shown), and compressed in the element. The compressed high-temperature high-pressure refrigerant is discharged to the refrigerant discharge tube 13, and flows into the radiator 14. The refrigerant which has flowed into the radiator 14 performs heat exchange between the refrigerant and the air blown by the fan 14F in the radiator to radiate heat. The refrigerant which has radiated the heat in the radiator 14 enters the capillary tube 16 disposed between the rotator 40 and the duct 50 through the refrigerant pipe 15. While the refrigerant passes through the capillary tube 16, the pressure thereof is reduced. In this state, the refrigerant flows into the evaporator 18 in the duct 50 through the refrigerant pipe 17. It is to be noted that the refrigerant pipe 17 is disposed apart from the refrigerant suction tube 11 connected to the outlet side of the evaporator 18 in the insulating manner as described above, so that the refrigerant flowing through the refrigerant pipe 17 as described above is not influenced by the refrigerant flowing through the refrigerant suction tube 11, that is, the refrigerant does not absorb any heat from the refrigerant flowing through the refrigerant suction tube 11, does not evaporate, and flows into the evaporator 18.

The refrigerant which has flowed into the evaporator 18 takes the heat from the air circulated through the duct 50 to evaporate in the evaporator. Then, the refrigerant which has received the heat (i.e., the heat of the optical element 5) of the air circulated through the duct 50 flows into the refrigerant suction tube 11, flows from the duct 50 via the hole 19, is sucked into the reflector 21 disposed in the rotator 40, is compressed, flows into the radiator 14, and releases the heat to the air blown in the radiator 14. Thus, the refrigerant repeats this cycle.

On the other hand, the air cooled by taking the heat from the air by the refrigerant in the evaporator 18 is discharged into the communication tube 50B from the blowout ports 52 formed right above the liquid crystal display panels 6 and the incident-side sheet polarizers 8A, 8B by the fan 18F installed in the sealed path 50A of the duct 50, and supplied to the liquid crystal display panels 6; the incident-side sheet polarizers 8A, 8B and the cross dichroic prism 25. That is, the air which has flows into the communication tube 50B from the blowout ports 52 passes through gaps formed between the liquid crystal display panels 6 and the incident-side sheet polarizers 8A provided in the communication tubes 50B, between the liquid crystal display panels 6 and the outgoing-side sheet polarizers 8B, between the polarization plate 8A and one wall surface of the communication tube 50B (i.e., a hole connected to an opening of the box member 27) and between the polarization plate 8B and the other wall surface of the communication tube 50B (i.e., the cross dichroic prism 25). In consequence, the liquid crystal display panels 6, the incident-side sheet polarizers 8A, 8B and the cross dichroic prism 25 release the heat to the air (cold air), and are cooled.

Then, the air heated by receiving the heat from the liquid crystal display panels 6, the incident-side sheet polarizers 8A, 8B and the cross dichroic prism 25 is sucked into the sealed path 50A from the suction ports 53 formed right under the liquid crystal display panels 6 and the incident-side sheet polarizers 8A, 8B to reach the evaporator 18. In the evaporator, the air is cooled by the heat exchange performed between the air and the refrigerant flowing through the evaporator 18, and is supplied to the liquid crystal display panels 6, the incident-side sheet polarizers 8A, 8B and the cross dichroic prism 25 from the blowout ports 52 via the fan 18F again, thereby repeating the cycle.

Thus, the duct 50 for supplying the cold air subjected to the heat exchange between the air and the evaporator 18 of the freezing unit 10 to the liquid crystal display panels 6, the incident-side sheet polarizers 8A, 8B and the cross dichroic prism 25 is formed around the liquid crystal display panels 6, the incident-side sheet polarizers 8A, 8B and the cross dichroic prism 25, whereby the air subjected to the heat exchange between the air and the evaporator 18 of the freezing unit 10 can be supplied to the liquid crystal display panels 6, the incident-side sheet polarizers 8A, 8B, the cross dichroic prism 25 and the like and can be cooled by the fan 18F. In consequence, the liquid crystal display panels 6, the incident-side sheet polarizers 8A, 8B, the cross dichroic prism 25 and the like can be cooled without being influenced by an outside air temperature, and the optical element 5 including the liquid crystal display panels 6, the incident-side sheet polarizers 8A, 8B, the cross dichroic prism 25 and the like can constantly be maintained at an optimum constant temperature.

In particular, the cold air subjected to the heat exchange between the air and the evaporator 18 can constantly be supplied to the liquid crystal display panels 6, the incident-side sheet polarizers 8A, 8B and the cross dichroic prism 25 as described above, so that an amount of the heat to be released is remarkably increased as compared with a case where outside air is supplied to the liquid crystal display panels as in a conventional example. Therefore, the fan is miniaturized to reduce an installation space, and an amount of the air to be blown by the fan can be reduced to reduce noise. Furthermore, as compared with conventional electronic cooling, an energy efficiency can remarkably be improved.

Furthermore, the air heated by the heat generated by the liquid crystal display panels 6 and the refrigerant flowing through the evaporator 18 of the freezing unit 10 perform heat exchange therebetween, whereby the heat of the liquid crystal display panels 6 can be conveyed by the refrigerant, and released to the outside air blown in the radiator 14. Therefore, unlike a case where the optical element is cooled by the electronic cooling, a degree of freedom in spatial layout design (in the main body 1) improves.

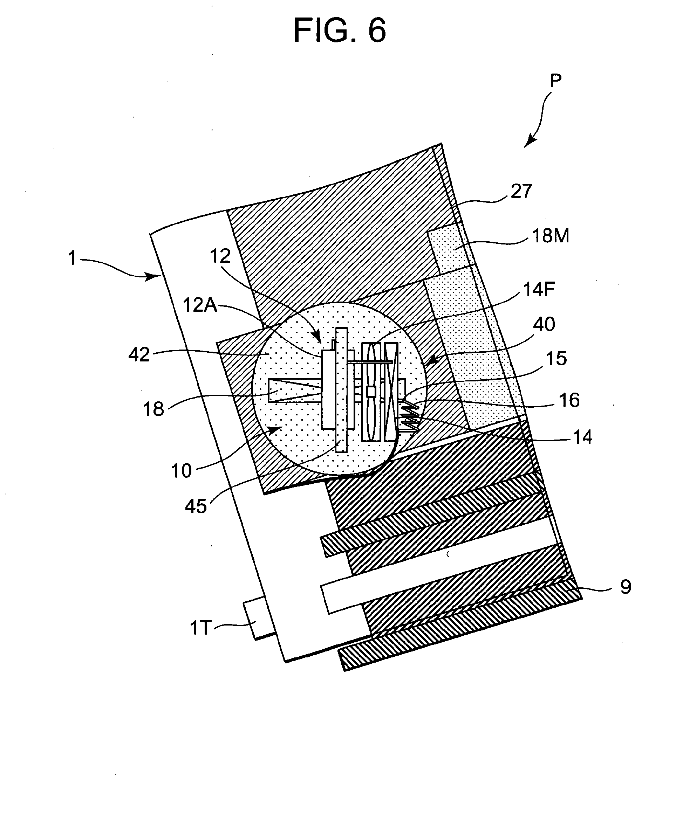

On the other hand, in a case where the liquid crystal display projector P is rotated around the burner axis A of the light source 2 as described above, the dial 45 attached to the panel 42 on the side of the outer surface of the rotator 40 is operated, whereby the freezing unit 10 can maintain its basic posture as shown in FIG. 6.

Thus, when the main body 1 rotates, the dial 45 is operated to adjust the posture of the freezing unit 10. In consequence, even when the main body 1 rotates to any posture, for example, even when the main body 1 is vertically (head and tail) reversed around the burner axis A of the light source 2, the basic posture of the freezing unit 10 can be maintained, so that the freezing unit 10 can be operated without any trouble. In consequence, without constituting any special oil supply mechanism in the compressor 12, the oil can smoothly be supplied to a frictional part, so that enlargement of the compressor 12 and steep rise of manufacturing cost can be minimized.

It is to be noted that in the present embodiment, the panel is rotatably supported on the side wall 1A of the main body 1 by the hole 43 of the main body 1, but the present invention is not limited to this embodiment, and the panel 42 on the outer surface of the rotator 40 and an edge of the duct 50 may rotatably be supported on the duct. In this case, the capillary tube 16 is disposed in the rotator 40.

Moreover, in the present embodiment, the dial 45 for adjusting the position of the rotator 40 is attached to the panel surface 42 exposed to the outer surface of the main body 1, and the dial 45 is operated to adjust the posture of the rotator 40, whereby the basic posture of the freezing unit 10 is maintained. However, for example, the posture of the rotator 40 may automatically be adjusted in accordance with the gravity and gravity center position, or the posture of the freezing unit 10 may automatically be adjusted with a posture sensor, an encoder or the like. Even in this case, the present invention is effective.

### (Embodiment 2)

Furthermore, in Embodiment 1 described above, the whole freezing unit 10 is rotatably installed, but in the present invention, the whole unit does not have to be rotated as long as posture adjustment means can maintain at least a basic posture of a compressor 12. To solve the problem, in the present embodiment, an embodiment will be described in a case where the posture adjustment means adjusts the basic posture of the compressor 12 only so that the basic posture is maintained in accordance with a posture change of a main body. It is to be noted that in the present embodiment, basic constitution and operation and the like are similar to those of a liquid crystal display projector P of the above embodiment described in detail. Therefore, description thereof is omitted, and an only different constitution will be described.

The posture adjustment means of the present embodiment is constituted of a rotary shaft 60 arranged in parallel with a burner axis A (an optical axis) of a light source 2 on the same plane, and a compressor 12 is installed around the rotary shaft 60 so as to be rotatable around the rotary shaft 60. Specifically, the rotary shaft 60 extends through and is connected to a sealed container 12A of the compressor 12 in a diametric direction (a horizontal direction) crossing an axial center direction (a vertical direction) of the compressor 12 at right angles, and the rotary shaft is rotatably supported in a hole (not shown) formed in a side wall 1A. In the present embodiment, oil can smoothly be supplied to a frictional part (a sliding part) of the compressor 12 owing to the rotary shaft 60 (a lubricating characteristic can be maintained), and the rotary shaft extends through the compressor 12 and is connected to a position of the compressor 12 close to the center thereof in a longitudinal direction, corresponding to the gravity center of the compressor.

Moreover, a dial 55 for adjusting a posture of the compressor 12 is disposed on one end of the rotary shaft 60 exposed from an outer surface of a main body 1, and the dial is connected to the rotary shaft 60. That is, in the present embodiment, the dial 55 is operated to rotate the rotary shaft 60, and the compressor 12 connected to this rotary shaft can rotate with the rotation of the rotary shaft 60. In the present embodiment, the dial 55 is operated to rotate the compressor 12 as much as 180 degrees in clockwise and counterclockwise directions around the rotary shaft 60.

It is to be noted that in the present embodiment, a radiator 14, a fan 14F and a capillary tube 16 constituting a freezing unit 10 except the compressor 12 are fixed onto the main body 1, and an evaporator 18 is fixedly disposed in a sealed path 50A of a duct 50 installed on the main body 1. In this case, a refrigerant discharge pipe 63 and a refrigerant suction pipe 61 of the compressor 12 are constituted of a pipe having flexibility, for example, a flexible tube. The flexible tube is constituted of a metal tube, a rubber tube or the like which can bend in accordance with contraction of a pipe of a piping system in an axial direction, displacement in a horizontal direction, bend displacement or the like.

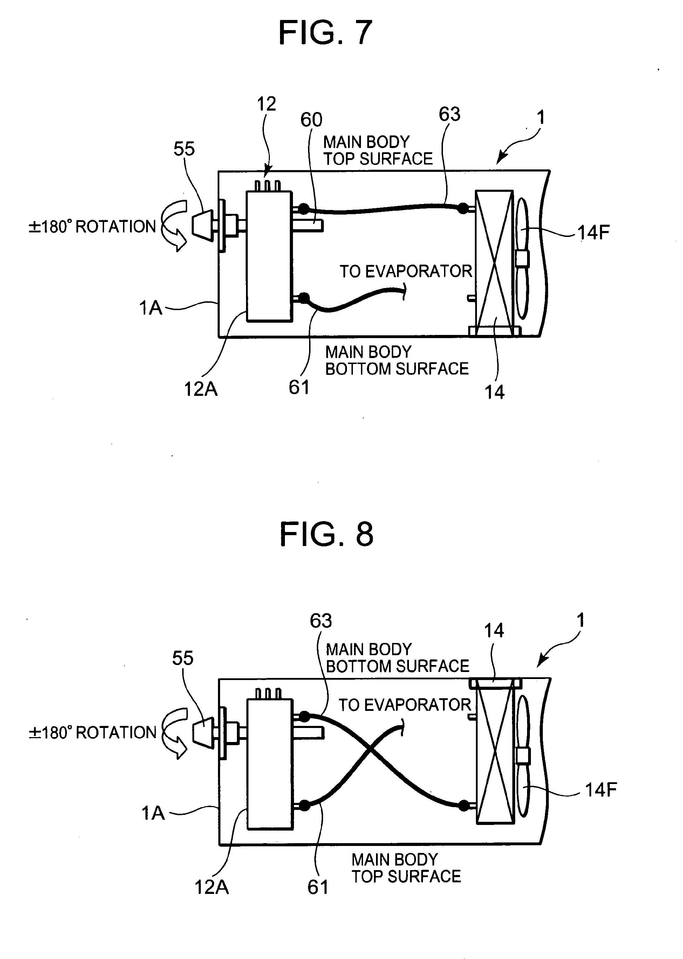

Then, when a liquid crystal display projector P is rotated around the burner axis A of the light source 2, for example, head and tail of the main body are reversed (rotated as much as 180 degrees), the dial 55 attached to one end of the rotary shaft 60 is operated, whereby a basic posture of the compressor 12 can be maintained as shown in FIG. 8.

In particular, a rotation angle of the compressor 12 is set to ±180 degrees, whereby even when the head and tail of the main body 1 is reversed (rotated as much as 180 degrees) as shown in FIG. 8, the pipes 61, 63 only intersect with each other, and are not mutually twisted. A connected state is secured, and a smooth flow of a refrigerant in a refrigerant circuit can be maintained. Therefore, even with the constitution of the present embodiment, an effect similar to that of the above embodiment can be obtained.

It is to be noted that in the present embodiment, the rotary shaft 60 extends through the compressor 12, and is connected to the position of the compressor close to the center thereof in the longitudinal direction, corresponding to the gravity center of the compressor 12. However, the present invention is not limited to this embodiment, and the rotary shaft may be attached to a position higher than the center of the compressor 12 in the longitudinal direction or the gravity center of the compressor 12. In a case where this gravity center position is considerably away from the center position, a weight is preferably attached to the compressor 12 so that the gravity center of the compressor 12 is brought close to the center of the compressor 12 in the longitudinal direction. In consequence, the compressor 12 can smoothly be rotated around the rotary shaft 60. It is to be noted that it is most preferable to connect the rotary shaft 60 to a position which matches a geometric center of the compressor 12 and which is close to the gravity center position of the compressor 12 and which is above the gravity center thereof. In a case where the position where the rotary shaft 60 is attached comes close to the geometric center of the compressor 12 in this manner, a rotation radius of the rotary shaft 60 is reduced, and satisfactory rotation of the compressor 12 can be realized.

Furthermore, in the present embodiment, the dial 55 for adjusting the position of the rotary shaft 60 is attached, and the dial 55 is operated to adjust the posture of the rotary shaft 60, whereby the basic posture of the compressor 12 is maintained. However, for example, the posture of the compressor 12 may automatically be adjusted in accordance with the gravity and gravity center position, or the posture of the compressor 12 may automatically be adjusted with a posture sensor, an encoder or the like. Even in this case, the present invention is effective.

Moreover, in the above embodiments, as one embodiment of the apparatus including the freezing unit 10, the liquid crystal display projector has been described, but the projector is not limited to this example. There is not any special restriction on the projector as long as a main body of the projector is constituted of a light source, an optical element for processing the light emitted from the light source in accordance with image information, and a projection lens for projecting the processed image of the projected light onto a screen. For example, the present invention is effectively applied to, for example, DLP projector (DLP (registered trademark)). Furthermore, in first to fifth aspects of the invention, the apparatus including the freezing unit 10 is not limited to the projector, and the invention may be applied to an apparatus such as a conveyable refrigerator or freezer, a car air conditioner or a personal computer.

## Claims

1. An apparatus including a freezing unit which has a main body provided with the freezing unit having a refrigerant circuit constituted of at least a compressor, a radiator, a pressure reducing unit and an evaporator,
the apparatus being provided with posture adjustment means for adjusting the main body to a basic posture to maintain at least a lubricating performance of the compressor in accordance with a posture change of the main body.

2. The apparatus including the freezing unit according to claim 1, wherein the posture adjustment means adjusts a basic posture to maintain a flow of a refrigerant in the refrigerant circuit.

3. The apparatus including the freezing unit according to claim 2, wherein the posture adjustment means rotates to adjust the basic posture of the whole freezing unit, and the compressor, the radiator and the evaporator are arranged around a rotary shaft of the posture adjustment means.

4. The apparatus including the freezing unit according to claim 3, wherein an inlet pipe and an outlet pipe of the evaporator are arranged along the rotary shaft of the posture adjustment means and arranged away from each other.

5. The apparatus including the freezing unit according to claim 1, wherein the posture adjustment means adjusts the basic posture of the compressor only, and a refrigerant discharge pipe and a refrigerant suction pipe of the compressor are made of pipes having flexibility.

6. A projector including a freezing unit, which is the apparatus according to any one of claims 1 to 5, comprising a main body including a light source, an optical element which processes light emitted from the light source in accordance with image information, and a projection lens which projects a projected image of the processed light onto a screen,
wherein the posture adjustment means rotates to adjust a basic posture of the whole freezing unit or a compressor only, and a rotary shaft of the posture adjustment means is arranged in parallel with an optical axis of the light source on the same plane.
